# EUROPEAN PATENT APPLICATION

(11) **EP 1 238 831 A2**
(43) Date of publication of application: **11.09.2002**
(21) Application number: 02251593.6
(22) Date of filing: 06.03.2002
(51) Int. Cl.: B60C 25/00, B60C 25/05, B60C 25/132

(54) **Tyre changing system**

(30) Priority: 07.03.2001 GB 0105597
(71) Applicant: RTS Line Services Limited, Paisley, PA1 2UA (GB)
(72) Inventor: Moohan, John, Paisley, PA2 6BQ (GB)
(74) Representative: Murnane, Graham John

(57) **Abstract**

A tyre changing system (1) comprises a vehicle (400) having an internal combustion engine (14), a drive shaft (12) driven by the engine, and a power take off unit (10) which can be switched to take off power from the drive shaft. The power take off unit (10) drives a hydraulic pump (18) which provides hydraulic power to a hydraulic circuit, which in turn drives a hydraulically powered tyre changing apparatus (80) mounted in the vehicle. The use of a hydraulically driven tyre changing apparatus (80) avoids the need for a high voltage generator and electrical motor, so that all the components of the system can be safely operated within the vehicle. The system can further include a hydraulically driven compressor (60) and a tyre inflation apparatus (100) which utilises compressed air from the compressor. The system can further include a hydraulically driven tyre lifting apparatus (50) adapted for lifting a tyre from the ground outside the vehicle (400) to the floor (408) of a storage area within the vehicle (400).

## Description

The invention relates to a hydraulic system for changing the tyres of road vehicles. In particular, the invention relates to a mobile hydraulic system for changing the tyres of Heavy Goods Vehicles (HGVs).

Conventional tyre changers, which are commercially available, utilise three phase motors to provide the power requirements of the unit. Such three phase motors require an electrical supply voltage of between 380 and 415 V. This requirement is not easily provided within a mobile vehicle and is contrary to current health and safety legislation, which discourages the provision of high voltage electrical apparatus inside a vehicle fitted with an internal combustion engine because of the risk of explosion. Fixed hydraulic tyre changers are known but have not been adapted to allow transportation until now because of their large size and weight and the necessity of providing a separate compressor.

Hydraulic tail lifts (to load or unload tyre and wheel assemblies onto the transportation vehicle) and air compressors (to inflate tyres) are also commercially available. However, the provision of all these services together with a tyre changing apparatus in a mobile environment has up to now required the use of separate vehicles and power sources, for example auxiliary engines. The use of auxiliary engines to power a tyre changer can result in high noise levels and fuel emissions.

It is an object of the present invention to provide a hydraulic tyre changing and inflating system which is mobile and is self-sufficient in its power requirements.

According to the present invention there is provided a tyre changing system comprising a vehicle having an internal combustion engine, a drive shaft driven by said engine, a power take off unit adapted to take off power from said drive shaft, a hydraulic pump driven by said power take off unit, and a tyre changing apparatus fixed to said vehicle,
wherein said tyre changing apparatus is hydraulically driven.

The use of a hydraulically driven tyre changing apparatus avoids the need for a high voltage generator and electrical motor fixed to the vehicle. The hydraulic power to drive the tyre changing apparatus is taken from the drive shaft of the vehicle, via a power take off unit and a hydraulic pump, which is linked by a hydraulic circuit to the tyre changing apparatus.

Preferably the system comprises one or more hydraulic oil storage tanks. At least one tank may be mounted beneath the body of the vehicle, thereby leaving additional space within the body of the vehicle for working and storage of equipment.

Preferably the system further comprises a hydraulically driven compressor. Preferably the apparatus further comprises a tyre inflation apparatus which utilises compressed air from said compressor. The tyre inflation apparatus may be fixed to the vehicle. Preferably the apparatus further comprises one or more tanks for the storage of compressed air.

The system may further comprise a tyre lifting apparatus adapted to lift tyres from the ground outside the vehicle to the floor of a storage area within the body of the vehicle. Preferably the tyre lifting apparatus is hydraulically driven. The tyre lifting apparatus may be linked by the hydraulic circuit to the hydraulic pump.

Preferably the tyre lifting apparatus is mounted within the storage area. Preferably the tyre lifting apparatus includes a pivoting arm adapted to hold the tyre in a non-vertical position leaning against the pivoting arm during lifting. In use the tyre to be replaced can be rolled over the adjacent ground to a door in the body of the vehicle. The tyre lifting apparatus is preferably mounted near the door. The tyre can then be rolled onto a platform provided at the end of the pivoting arm and leant against the pivoting arm, so that the tyre remains in a stable position while the pivoting arm is lifted up into the body of the vehicle.

Preferably the tyre lifting apparatus includes a spring-release mechanism adapted to prevent movement of the pivoting arm during travel of the vehicle.

Preferably the system includes an electrical controlled spool valve system for controlling the hydraulic actuation of the hydraulically driven system components. Preferably the electrical controls are 12 volt or 24 volt controls. Such voltages are low voltages and are safe for use in vehicles provided with internal combustion engines.

Preferably the system further comprises cab-mounted controls for controlling the operation of the power take off unit. These controls may be electrical controls or cable controls. The controls are adapted to cause the power take off unit to be disengaged from the drive shaft if the vehicle engine is switched off or if a drive gear of the vehicle is engaged.

An embodiment of the invention will now be described, by way of example only, with reference to the accompanying figures, where:
Fig. 1 is a schematic plan view of the mobile tyre changing system according to an embodiment of the present invention;
Fig. 2 is an elevational view of a bracket assembly used for mounting the power take off unit of the system of Fig. 1;
Fig. 3 shows the components of the bracket assembly of Fig. 2;
Fig. 4 is a schematic view of the hydraulic system used within the tyre changing system of Fig. 1;
Fig. 5 is a schematic view of the hydraulic circuit for the tyre lifting apparatus used with the tyre changing system of Fig. 1;
Fig. 6 is a partial elevational view on the tyre lifting apparatus used with the tyre changing system of Fig. 1;
Fig. 7 is a schematic view of the air system used with the tyre changing system of Fig. 1;
Fig. 8 is a schematic view of the electrical system of the tyre changing apparatus used with the tyre changing system of Fig. 1; and
Fig. 9 is a schematic view of the electrical system of the tyre lifting apparatus used with the tyre changing system of Fig. 1.

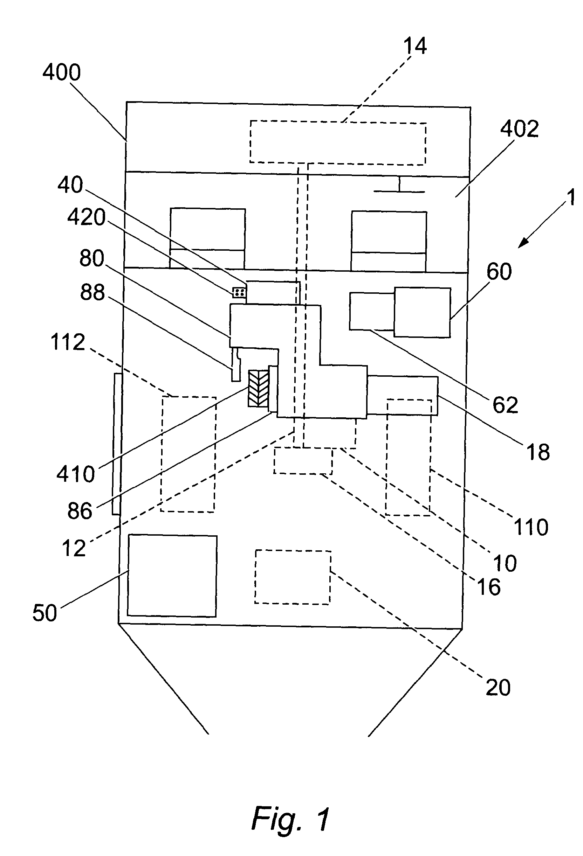

Referring to Fig. 1 there is shown a schematic plan view of a mobile tyre changing system 1 according to the invention comprising a vehicle 400 having an internal combustion engine 14, a drive shaft 12 driven by the engine 14, a power take off unit 10 adapted to take off power from the drive shaft 12, a hydraulic pump 18 driven by the power take off unit 10, and a hydraulically driven tyre changing apparatus 80 fixed to the vehicle.

The hydraulic tyre changing system 1 is located within a vehicle 400. The vehicle 400 is typically a medium to large sized commercial van. The vehicle body has space comprising the operator's cabin 402 and the storage area 404. In the present embodiment, the storage area 404 is dedicated to the housing and functioning of the hydraulic tyre changing system 1. The storage area has a floor 408 and walls to which the elements of the tyre changing system of the invention are attached.

Generally, the hydraulic tyre changing system 1 comprises a tyre changing apparatus 80 (typically an adapted Promont™ 924 tyre changer), an air compressor 60 (typically an adapted Hydrovane™ air compressor) and a tail lift or tyre lifting apparatus 50 (typically an adapted hydraulic vehicle tail lift). These components are powered from the vehicle's engine 14 and controlled by a hydraulic valve control assembly 40 which is operated by a number of switches (connected by a low voltage circuit) available to the operator.

A power take-off unit 10 is fitted to a rear wheel drive transportation vehicle 400 behind the second centre bearing (not shown) of the drive shaft 12. The power take-off unit 10 may be a Dana™ 941 unit.

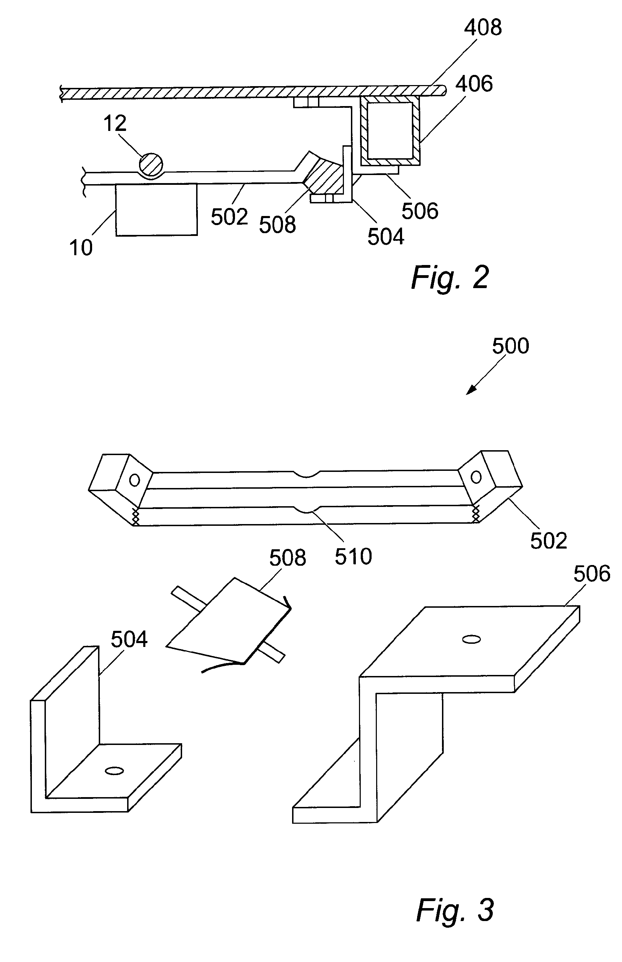

Figs. 2 and 3 show a typical bracket assembly 500 for mounting the power take-off unit 10. For a vehicle 400 such as a Mercedes Sprinter™, the bracket assembly 500 comprises two mounting brackets 502, four outer side brackets 504, four inner brackets 506 and four rubber mountings 508. The mounting bracket 502 will typically include a cut out 510 for the drive shaft 12.

As shown in Fig. 2, the components of the bracket assembly 500 are welded or bolted to each other.
The bracket assembly 500 is then welded to the vehicle's chassis 406 and bolted to the floor 408 of the vehicle 400.

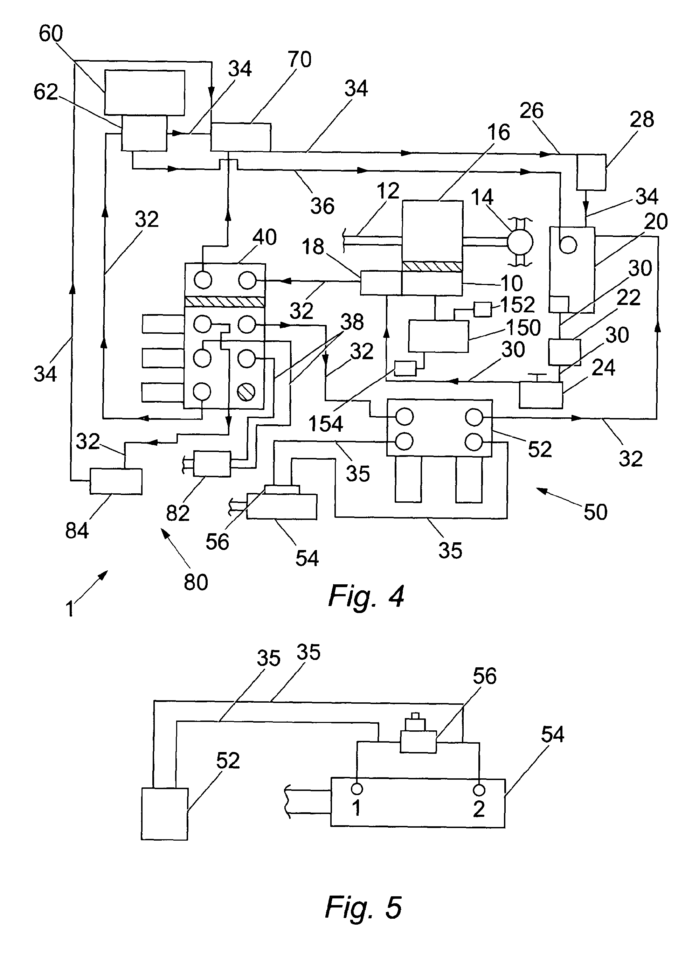

Referring to Fig. 4, when the power take-off unit 10 is engaged, the power from the engine 14 is directed to the tyre changing system 1, rather than to the rear transmission of the vehicle 400. Thus, the engine 14 is the power source of the system 1. The power take off unit is controlled by a mechanical or electronic power take off control system 150, which includes a switch means for engaging and disengaging the power take off unit. Ideally the switch means will be located in the cab of the vehicle, so that the vehicle operator can disengage the vehicle transmission (not shown) when the vehicle has reached the operating position, and can then engage the power take off unit 10.

The power take-off unit 10 will mechanically disengage if the vehicle engine is switched off. The disengagement is controlled by the power take off control system 150, which causes the power take off unit 10 to be disengaged from the drive shaft if the control system recognises that the engine switch 152 is operated to switch the vehicle engine 14 off.

The power take-off unit 10 will mechanically disengage if another gear of the transmission is selected, to prevent the vehicle being driven if the tyre changing system is operational. The disengagement is controlled by the power take off control system 150, which causes the power take off unit 10 to be disengaged from the drive shaft if the control system recognises that the gear selector 154 is operated to engage a drive gear of the vehicle transmission (not shown).

The power take-off unit 10 directs power via a power take-off gearbox 16 to a hydraulic pump 18. In operation, the hydraulic pump 18 will typically rotate at about 1400 rpm to provide around 90 litres of oil per minute. Typically, this will involve engaging the transmission of the vehicle 400 in third gear. The hydraulic pump 18 draws oil from a reservoir 20 by suction action. The reservoir 20 may be located on the underside of the vehicle 400. Alternatively, the reservoir 20 may be located within the vehicle 400, such as over a wheel arch. An oil filter 22 is provided at the outlet 23 of the reservoir 20 and an oil shut-off valve 24 is provided between the reservoir 20 and the hydraulic pump 18. The oil shut-off valve 24 allows the supply of oil to be terminated in the event of an emergency. The oil shut-off valve 24 is typically mechanically operated by the operator. The oil shut-off valve 24 is typically located in an easily accessible location within the vehicle 400. The supply piping 30 typically has a diameter of 38 mm.

The hydraulic pump 18 provides pressurised oil, typically at a pressure of 160 bar, to a hydraulic valve control assembly 40. The pressurised oil piping 32 typically has a diameter of 25 mm.

The hydraulic valve control assembly 40 controls the distribution of the pressurised oil to the various components of the system 1 depending on the selection by the operator. A number of electrical switches are provided on a control panel 420. The operator selects a switch which controls the opening of the corresponding spool valve. These switches are described later.

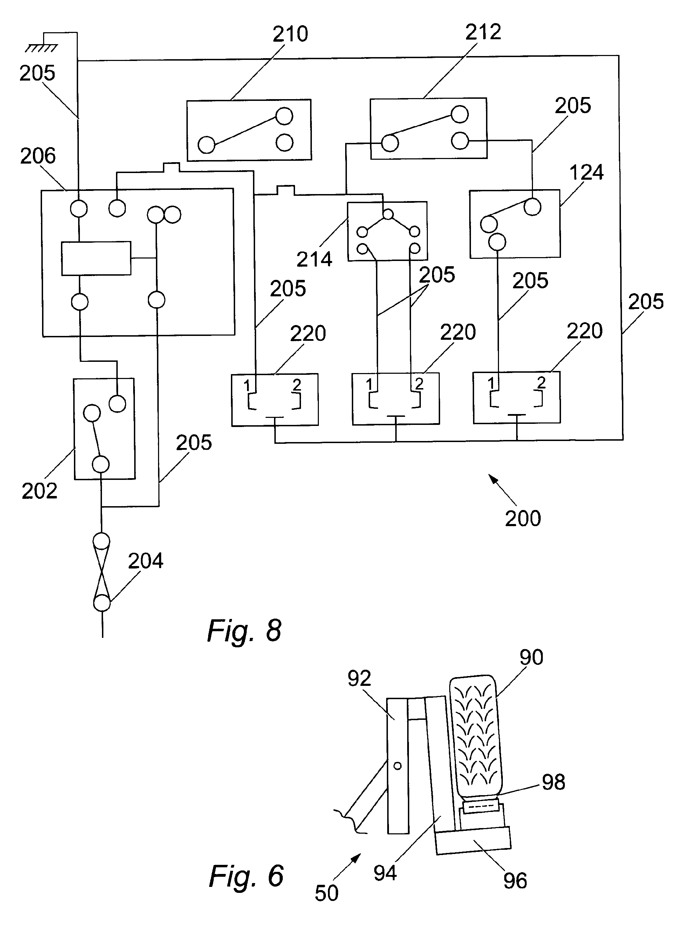

If the operator selects to operate the tail lift 50 then pressurised oil is directed to a tail lift valve block assembly 52. The tail lift valve block assembly 52 controls the distribution of oil to the tail lift ram 54 via a pilot check valve 56, typically rated at 7 bar, using piping 35 of a typical diameter of 6 mm. Return oil is directed to the reservoir 20 using return pipes 34 typically of 38 mm in diameter. The hydraulic circuit for the tail lift 50 is shown in more detail in Fig. 5, while Fig. 6 shows the structure of the tail lift or tyre lifting apparatus.

The tyre lifting apparatus 50 is used to lift a tyre 90 from the ground outside the vehicle to the floor 408 of the storage area 404 within the body of the vehicle. The tyre lifting apparatus is hydraulically driven, as described elsewhere. It has a frame 92 fixed to the vehicle 400. The frame 92 is conventional in nature and is not described further. The frame 92 has a pivoting arm 94 which in a conventional manner is controlled hydraulically to move between a lowered position, in which the base 96 at the end of the pivoting arm 94 is on the ground adjacent to the vehicle, and a raised position, in which the base 96 at the end of the pivoting arm 94 is on the floor 408 of the vehicle.

The pivoting arm 94 is inclined from the vertical by a small angle, typically between 0 and 10 degrees. The tyre 90 is rolled onto the base, or onto optional rollers 98 provided on the base 96, and is then leant against the pivoting arm 94 so that it is held in an equilibrium position while the pivoting arm 94 is raised.

The tyre lifting apparatus 50 includes a spring-release mechanism (not illustrated) adapted to prevent movement of the pivoting arm 94 during travel of the vehicle.

Referring again to Fig. 4, if the operator selects to operate the air compressor 60 then pressurised oil is directed from the hydraulic valve control assembly 40 to a compressor hydraulic motor 62 which operates the air compressor 60. Return oil is directed to an inlet 26 of the reservoir 20 via a hydraulic return manifold 70. This inlet 26 is provided with a return filter assembly 28. A compressor drain pipe 36, typically of 10 mm in diameter, also connects the compressor hydraulic motor 62 and the reservoir 20.

If the operator selects to operate the tyre changer 80 then pressurised oil is directed from the hydraulic valve control assembly 40 to one of the two components of the tyre changer 80. These two components are the wheel rotating hydraulic motor 82 and the tyre hydraulic spools 84.

Referring also to Fig. 1, in order to remove on old tyre or insert a new tyre onto a wheel assembly 410, the wheel 410 is first coupled with a rotatable disc component 86 of the tyre changer 80. This rotatable disc 86 is rotated by the wheel rotating hydraulic motor 82. Pressurised oil is directed from the hydraulic valve control assembly 40 to the wheel rotating hydraulic motor 82 using piping 38 typically of 13 mm in diameter. Return oil is directed back to the hydraulic valve control assembly 40 from where it is passed to the reservoir 20 via the return manifold 70.

To remove on old tyre or insert a new tyre, a blade component 88 of the tyre changer 80 is brought in contact with the tyre at the rim of the wheel assembly 410 as the wheel 410 rotates. This blade 88 urges a new tyre over the rim until it is secure on the wheel assembly 410, or the blade 88 urges the old tyre away from the rim so that it becomes detached from the wheel assembly 410. The positioning and motion of the blade 88, as well as the clamping of the wheel assembly on the rotating disc 86, are controlled by the tyre hydraulic spools 84. Pressurised oil is directed from the hydraulic valve control assembly 40 to the tyre hydraulic spools 84. Return oil is directed back to the reservoir 20 via the return manifold 70.

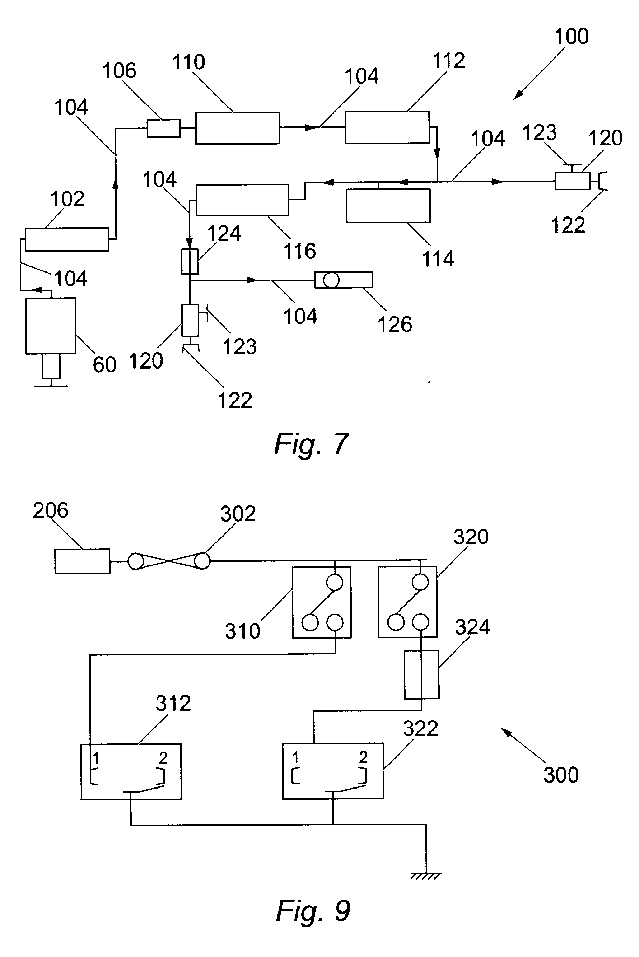

Referring to Fig. 7, there is shown the air system 100 used to inflate tyres. Air is directed from the compressor 60, typically a Hydrovane 508™, to an air cooler 102 using pneumatic piping 104, typically of 16 mm diameter. The cooled air is then passed via a non-return valve 106 to a first tank 110, which has a typical capacity of 60 litres. Air then travels to a second smaller tank 112, typically of 20 litre capacity.

The air is then passed to an unregulated on/off valve 120 with a typical rating of 8 bar (120 psi). This valve 120 includes a standard fitting 122 which allows connection to a tyre (not shown). The valve 120 may be manually operated by the operator to inflate the tyre by depressing a release mechanism 123 when the valve 120 is connected to the tyre.

When the pressurised air is not being used to inflate the tyre, or when the air pressure is excessive, air from the second tank 112 may also pass to a third tank 114, typically of 20 litre capacity. Air may also pass from this tank 114 to a fourth larger tank 116, typically of 60 litre capacity. From this tank 116, air may travel via an air pressure switch 124, such as a Danfosss™ switch, to either another unregulated on/off valve 120 or a regulated on/off valve 126.

Referring to Fig. 8, there is shown a schematic view of the electrical system 200 used for the tyre changing system 1. The system uses a conventional earth chassis ground. The electrical system 200 allows the operator to select the various components of the tyre changing system 1 as described above for Fig. 1. The electrical system 200 will operate using a typical potential difference of 12 or 24 V and so will not contravene any related health and safety legislation.

An electrical source, such as the battery (not shown) of the transportation vehicle 400 is connected via an ignition feed to a normally open main on/off switch 202 via a fuse 204 with a typical rating of 25 A. Suitably rated wiring 205 is used to make the connection. When the switch 202 is closed, a connection is made to a change-over relay 206 with a typical rating of 12 V.

The change-over relay 206 controls the electrical connection to a number of normally open switches. These switches comprise the tail lift on/off switch 210, the air compressor on/off switch 212, the air pressure switch 124, such as manufactured by Danfoss™, and the wheel rotation on/off switch 214. These switches provide an electrical connection to the various electric spool valves 220 which control operation of the various components of the hydraulic tyre changing system 1.

Fig. 9 shows a schematic of the electrical system 300 used for the tail lift 50 in more detail. Wiring from the change-over relay 206 is connected to an up switch 310 and a down switch 320 via a fuse 302 with a typical rating of 25 A. Each of the switches 310, 320 is connected to an electric spool valve 312, 322 which controls operation of the tail lift 50 in the up or the down direction. For safety purposes, an audible sounder 324 is located in series with the down switch 320 and its associated electric spool valve 322.

These and other modifications may be made within the scope of the invention, and the invention is not to be limited to the specific embodiment described above.

## Claims

1. A tyre changing system (1) comprising a vehicle (400) having an internal combustion engine (14), a drive shaft (12) driven by said engine (14), a power take off unit (10) adapted to take off power from said drive shaft (12), a hydraulic pump (18) driven by said power take off unit (10), and a tyre changing apparatus (80) fixed to said vehicle (400), wherein said tyre changing apparatus (80) is hydraulically driven.

2. A tyre changing system according to claim 1, further including a hydraulically driven compressor (60).

3. A tyre changing system according to claim 2, further including a tyre inflation apparatus (100) which utilises compressed air from said compressor (60).

4. A tyre changing system according to any preceding claim, further including a hydraulically controlled tyre lifting apparatus (50) adapted to lift a tyre from the ground outside the vehicle to the floor (408) of a storage area (404) within the body of the vehicle (400).

5. A tyre changing system according to claim 4, the tyre lifting apparatus (50) having a pivoting arm adapted to hold the tyre in a non-vertical position leaning against the pivoting arm during lifting.

6. A tyre changing system according to any preceding claim, further including an electrically controlled spool valve system (220, 429) for controlling the hydraulic actuation of one or more of the tyre changing apparatus (80), the compressor (60) and the tyre lifting apparatus (50).

7. A tyre changing system according to any preceding claim, further including a power take off control system (150) for controlling the operation of the power take off unit (10).

8. A tyre changing system according to claim 7, wherein the power take off control system (150) includes a switch means for engaging and disengaging the power take off unit (10).

9. A tyre changing system according to claim 7 or 8, wherein the vehicle includes an engine switch (152) for switching the vehicle engine (14) on or off, and wherein the power take off control system (150) is adapted to cause the power take off unit (10) to be disengaged from the drive shaft if the engine switch (152) is operated to switch the vehicle engine (14) off.

10. A tyre changing system according to claim 7, 8 or 9, wherein the vehicle includes a transmission having one or more drive gears and a gear selector (154) for engaging said drive gears, wherein the power take off control system (150) is adapted to cause the power take off unit to be disengaged from the drive shaft (12) if the gear selector (154) is operated to engage a drive gear of the vehicle.
